# EUROPÄISCHE PATENTSCHRIFT

(11) **EP 1 656 516 B1**
(45) Veröffentlichungstag und Bekanntmachung des Hinweises auf die Patenterteilung: **21.05.2008**
(21) Anmeldenummer: 04763829.1
(22) Anmeldetag: 05.08.2004
(51) Int. Cl.: F16J 15/34

(54) **GLEITRINGANORDNUNG EINER GLEITRINGDICHTUNG**
SLIDING RING ARRANGEMENT OF A SLIDING RING SEAL
ENSEMBLE A ANNEAU GLISSANT D'UNE GARNITURE ETANCHE A ANNEAU GLISSANT

(30) Priorität: 21.08.2003 DE 20312908 U
(43) Veröffentlichungstag der Anmeldung: 17.05.2006
(73) Patentinhaber: BURGMANN AUTOMOTIVE GMBH, 82547 Eurasburg (DE)
(72) Erfinder: FEIGL, Peter, 82335 Höhenrain (DE); KACHLER, Peter, 82049 Pullach (DE); RIES, Wolfgang, 82438 Eschenlohe (DE); SIMON, Clemens, 82319 Starnberg (DE)
(74) Vertreter: Schmidt, Horst
(86) Internationale Anmeldenummer: PCT/EP2004/008788
(87) Internationale Veröffentlichungsnummer: WO 2005/022013

(56) Entgegenhaltungen:
- EP-A- 0 380 749
- EP-A- 1 316 747
- US-A- 4 256 315
- US-A- 4 586 719
- US-A- 5 797 602

## Beschreibung

Die Erfindung betrifft eine Gleitringanordnung einer Gleitringdichtung gemäss dem Oberbegriff des Patentanspruches 1. Sie betrifft insbesondere eine solche mit einem Mitnehmergehäuse, an dem einer der Gleitringe der Dichtung in Drehkraft übertragender Beziehung umfangsseitig gehalten ist.

Eine derartige Gleitringanordnung ist beispielsweise bekannt aus US 5 797 602 A, bei dem zwischen einem auf einer Welle aufgesetzten Mitnehmengehäuse und einem rotierenden Gleitring ein dünner Elastomerring angeordnet ist, der eine kraftschlüssige Verbindung zwischen der Teilen schafft. Über die reine Mitnehmerfunktion ggf. hinausgehende Funktionen des Elastomerrings sind der Druckschrift keine Angaben zu entnehmen. Bekannt ist es ferner US 4 586 719 A, ein Mitnehmergehäuse und den rotierenden Gleitring durch eine Vielzahl dazwischen angeordnete separate Mitnehmerelemente aus nachgiebigem Material zu verknüpfen. Diese Elemente dienen dem Zweck, den Gleitring mit einer radial nach innen gerichtete Kraft zu beaufschlagen, um auf die Position der Dichtfläche des Ringes eine auf die herrschenden Torsionskräfte angepasste kompensierende Wirkung auszuüben.

Demgegenüber wurde festgestellt, dass beim Einsatz von gattungsgemässen Gleitringdichtungen bei Gerätschaften, wie Wasserpumpen oder dgl. bei Betrieb Schwingungen auftreten können, die Beschädigungen an den Aufbauteilen der Gleitringdichtungen in einem solchen Ausmass hervorrufen können, dass diese zu einem vorzeitigen Versagen der Dichtungen führen können oder zumindest erhöhte Leckage zur Folge haben. Es treten insbesondere Axial- und Torsionsschwingungen im Bereich des rotierenden Gleitringes der Gleitringdichtungen auf, die umso schädlichere Auswirkungen haben, je hochfrequenter sie sind.

Der Erfindung liegt die Aufgabe zugrunde, eine gattungsgemässe Gleitringanordnung zu schaffen, mit der die schädlichen Auswirkungen von wenigstens hochfrequenten Torsionsschwingungen vermieden oder wenigstens wesentlich herabgesetzt werden. Ferner soll die Gleitringanordnung montagefreundlich sein und mit geringem baulichen Aufwand realisiert werden können.

Diese Aufgabe wird erfindungsgemäss durch die Merkmale des Patentanspruches 1 gelöst. Gemäss der Erfindung ist zwischen dem rotierenden Gleitring und einem Mitnehmergehäuse ein ringförmiges Dämpfungselement in Gestalt vorzugsweise eines Kunststoffformteiles angeordnet, über das die Drehkraft vom Mitnehmergehäuse auf den Gleitring übertragen werden muss. Das Dämpfungselement besteht aus einem ringförmigen den Gleitring mit einem radialen Spiel umgreifenden Basiskörper mit daran ausgebildeten umfänglich beabstandeten Dämpfungsbereichen mit vergrösserter Querschnittsabmessung, die in Aussparungen am Gleitring und Mitnehmergehäuse aufgenommen sind. Dank der besonderen Ausgestaltung und Anordnung des Dämpfungselementes vermag dieses nicht nur den Gleitring gegenüber dem Mitnehmergehäuse in Bezug auf auftretende Torsionsschwingungen wirksam zu entkoppeln, sondern wirkt darüber hinaus schwingungsdämpfend. Neben Torsionsschwingungen werden auch axiale Schwingungen in gewissem Masse durch das Dämpfungselement abgefangen. Eine bevorzugte Weiterbildung der Erfindung sieht ferner vor, dass der rotierende Gleitring ausserdem axial beweglich ist und zwischen dem Gleitring und dem Mitnehmergehäuse eine Federvorspanneinrichtung vorgesehen ist. Hierdurch wird einne zusätzliche wirksame Entkopplung des Gleitringes gegenüber axialen Schwingungen erhalten. Ein weiterer Vorteil des Dämpfungselementes ist, dass hierdurch in einfacher, preisgünstiger Weise die Realisierung einer Gleitringanordnung in Gestalt einer Montageeinheit ermöglicht wird, indem das Dämpfungselement, der Gleitring und das Mitnehmergehäuse durch leicht zu handhabende Rastmittel miteinander verbunden werden können. Weitere vorteilhafte Ausgestaltungen der Erfindung und die damit verbundenen Wirkungen und Vorteile werden aus der nachfolgenden Beschreibung einer Ausführungsform deutlich.

Die Erfindung wird nachfolgend anhand einer Ausführungsform und der Zeichnung näher erläutert. Es zeigen:
- Fig. 1: in einer längsgeschnittenen Ansicht eine Gleitringdichtung mit einer Gleitringanordnung gemäss einer Ausführungsform der Erfindung im Zustand des Einbaus in einer abzudichtenden Gerätschaft, und
- Fig. 2: in einer vergrösserten perspektivischen auseinandergezogenen Teilansicht einen Dämpfungsring und ein Mitnehmergehäuse der Gleitringanordnung nach Fig. 1,

Der grundsätzliche Aufbau von Gleitringdichtungen ist dem Fachmann bekannt. Es genügt deshalb an dieser Stelle der allgemeine Hinweis, dass die Gleitringdichtung ein Paar zusammenwirkende Gleitringe 1, 2 umfasst, von denen der Gleitring 1 drehfest an einem Dichtungsgehäuse 3 in geeigneter Weise, z.B. durch einen Schrumpfsitz gehalten ist. Der andere Gleitring 2 kann über ein Mitnehmergehäuse 5 mit einer Welle 6, axial dazu relativ beweglich, in Drehkraft übertragender Beziehung gebracht werden, so dass sich der Gleitring 2 gemeinsam mit der Welle 6 drehen kann. Mit dem Bezugszeichen 7 ist das Gehäuse einer Gerätschaft, z.B. einer Pumpe oder eines Verdichters angedeutet, deren Inneres mittels der Gleitringdichtung gegenüber der Aussenumgebung abgedichtet ist.

Die Gleitringe 1, 2 haben gegenüberliegende zusammenwirkende Dichtflächen 8, 9, zwischen denen bei Betrieb ein Dichtspalt gebildet ist, um einen Bereich aussenumfänglich gegenüber einem Bereich innenumfänglich des Dichtspaltes abzudichten. Die Dichtflächen 8, 9 können bei Betrieb auch in berührendem dichtenden Eingriff miteinander stehen.

Eine Vorspanneinrichtung 10 ist vorgesehen, um den rotierenden Gleitring 2 mit einer axialen Vorspannkraft zu beaufschlagen und die Dichtflächen 8, 9 in vorgespanntem Eingriff miteinander zu halten. Bei der Vorspanneinrichtung 10 handelt es sich vorzugsweise um eine Federanordnung bestehend aus mehreren umfänglich der Welle 6 verteilt angeordneten Federn, die sich mit einem axialen Ende an einer radialen Endwand 11 des Mitnehmergehäuses 5 und am anderen axialen Ende an einem die Welle 6 umgreifenden Kraftübertragungsring 12 abstützen. Der Kraftübertragungsring 12 ist nahe der benachbarten End- oder Stirnseite des Gleitringes 2 vorgesehen und liegt an einer in einer Ausnehmung 13 des Gleitringes 2 angeordneten Sekundardichtung 14 in Gestalt z.B. eines O-Ringes an. Die Vorspannkraft der Vorspanneinrichtung 10 wirkt daher über die Sekundardichtung 14 auf den Gleitring 2. Gleichzeitig wird die Sekundardichtung 14 mittels des Kraftübertragungsringes 12 an einer Herausbewegung aus der Ausnehmung 13 gehindert.

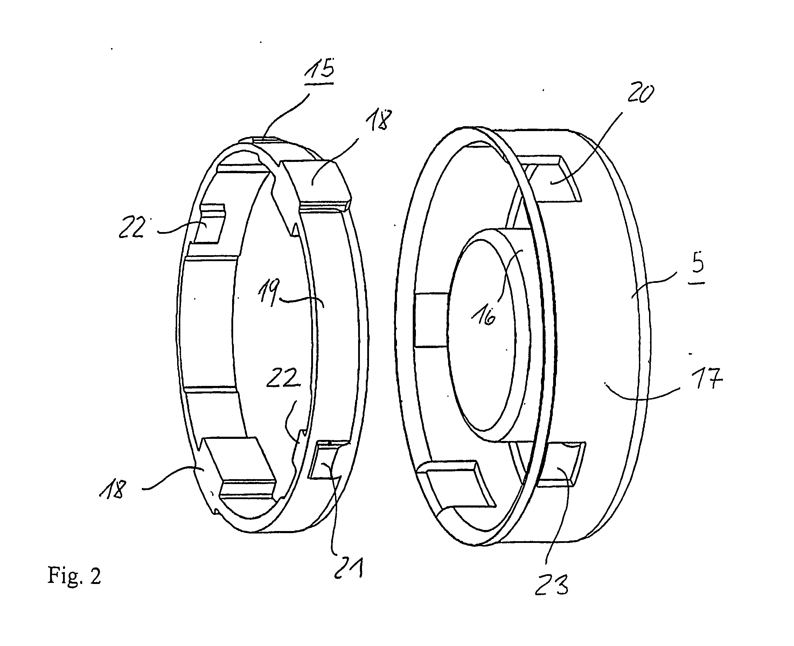

Erfindungsgemäss ist ein schwingungsdämpfendes Element oder ein Dämpfungsring 15 vorgesehen, über den eine Drehkraft übertragende Beziehung zwischen dem Mitnehmergehäuse 5 und dem Gleitring 2 geschaffen ist, indem der Dämpfungsring 15 einerseits in Eingriff mit dem Mitnehmergehäuse 5 und andererseits mit dem Gleitring 2 steht, worauf nachfolgend näher anhand von Fig. 2 eingegangen wird, die den Dämpfungsring 15 und das Mitnehmergehäuse 5 mit weiteren Details zeigt.

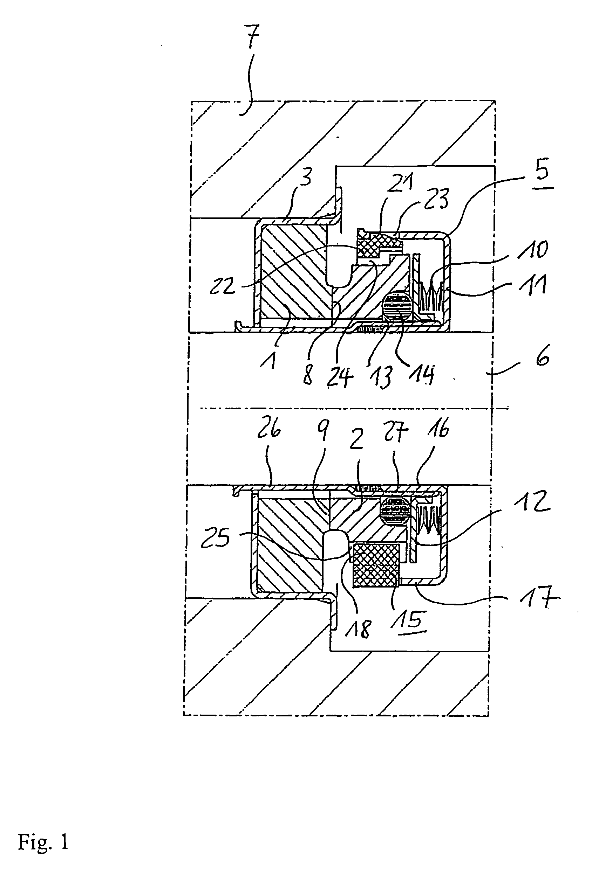

Das Mitnehmergehäuse 5 hat vorzugsweise, wie dargestellt, einen U-förmigen Querschnitt und umfasst einen zentralen röhrförmigen Bereich 16, der von der radialen Endwand 12 axial absteht und eine Durchlassöffnung definiert, durch die die Welle 6 mit geringem Spiel oder Presssitz hindurchgeführt werden kann, wie dies in Fig. 1 gezeigt ist, und koaxial zum röhrförmigen Bereich 16 mit radialem Abstand dazu einen äusseren Umfangswandbereich 17. Der Raum zwischen dem röhrförmigen Bereich 16 und dem äusseren Umfangswandbereich 17 ist so dimensioniert, dass darin der Gleitring 2 mit radialem und axialen Spiel aufgenommen werden kann.

Der Dämpfungsring 15 umgreift den Gleitring 2 aussenumfänglich mit einem geeigneten geringen radialen Spiel und umfasst einen ringförmigen Basiskörper 19 und an diametral gegenüberliegenden Stellen des Basiskörpers 19 ausgebildete Dämpfungsbereiche 18 mit erhöhter dämpfender Wirkung. Die Dämpfungsbereiche 18 überragen den Basiskörper 19 radial nach aussen und nach innen und bilden im Wesentlichen rechteckförmige Verdickungen am Basiskörper 19, deren nach aussen ragende Abschnitte in dazu ausgerichteten rechteckförmigen ersten Aussparungen 20 im Umfangswandbereich 17 des Mitnehmergehäuses 5 aufgenommen werden können, um eine formschlüssige Verbindung zwischen dem Dämpfungsring 15 und dem Mitnehmergehäuse 5 zu schaffen. Die Erfindung ist auf eine rechteckförmige Konfiguration der Dämpfungsbereiche 18 und der ersten Aussparungen 20 nicht beschränkt. Vielmehr können auch andere geeignete Konfigurationen, wenn erwünscht, vorgesehen werden.

Wie in Fig. 1 zu sehen ist, greifen die nach innen ragenden Abschnitte der Dämpfungsbereiche 18 in dazu ausgerichtete axiale Nuten oder Aussparungen 25 des Gleitringes 2 ein.

Ferner ist an Stellen, die gegenüber den Dämpfungsbereichen 18 umfänglich versetzt sind, je ein Paar vom äusseren Umfang des Basiskörpers 19 nach aussen ragender Rastnasen 21 und nach innen ragender Rastnasen 22 vorgesehen, die in einer diametralen Ausrichtung zueinander angeordnet sind. Die äusseren Rastnasen 21 können in dazu ausgerichteten zweiten Aussparungen 23 im Umfangswandbereich 17 des Mitnehmergehäuses 5 mit Schnappsitz eingreifen. Die nach innen ragenden Rastnasen 22 können in dazu ausgerichteten Nuten oder Aussparungen 24 im äusseren Umfang des Gleitringes 2 eingreifen, vgl. Fig. 1. Die Rastnasen 21, 22 erleichtern die Montage der Aufbauteile der vorbeschriebenen Gleitringanordnung zu einer Montageeinheit, die das Mitnehmergehäuse 5, den Dämpfungsring 15, die Vorspanneinrichtung 10 und den Gleitring 2 umfassen kann und zwischen dem Gleitring 2 und dem Mitnehmergehäuse 5 eine Drehkraft übertragende Beziehung mit einem Dämpfungsglied für insbesondere Torsionsschwingungen vorsieht.

Der Dämpfungsring 15 ist vorzugsweise ein Formteil aus einem geeigneten Kunststoffmaterial mit ausreichender Festigkeit, Wärmebeständigkeit und dämpfender Eigenschaft. Obschon andere Kunststoffmaterialien verwendet werden können, kommen vorzugsweise Kunststoffe aus der Gruppe der Polyolefine zum Einsatz. Ein bevorzugtes Kunststoffmaterial ist Polyamid, welches einen Anteil von 5 bis 35 Vol %, vorzugsweise etwa 20 Vol %, Kohlenstoff enthalten kann. Wenn erwünscht, kann das Kunststoffmaterial faserverstärkt sein.

Wie in Fig. 1 gezeigt ist, kann eine auf der Welle 6 aufschiebbare Hülse 26 vorgesehen sein, die einen im Durchmesser vergrösserten Abschnitt 27 hat, der den röhrförmigen Bereich 16 des Mitnehmergehäuses 5 innenseitig, vorzugsweise mit Reibschluss, übergreifen kann. Auf der Hülse 26 kann ferner der stationäre Gleitring 1 angeordnet und in seiner Lagebeziehung zum Gleitring 2 fixiert sein. Die Hülse 26 erleichtert die Montage der Gleitringdichtung auf der Welle 6 und schafft gleichzeitig eine Transportsicherung, die ein Auseinanderfallen der Teile beim Transport verhindert. Ferner schützt die Hülse 26 die Gleitringe 1, 2 vor Beschädigungen bei der Montage und während des Transportes.

Darauf hinzuweisen ist ferner, dass die dämpfende Wirkung des Dämpfungsringes 15 gegen insbesondere hochfrequente Schwingungen weiter dadurch unterstützt wird, dass sich bei Betrieb in dem Raum, der zwischen dem Gleitring 2 und der Endwand 12 sowie dem röhrförmigen Bereich 16 und Umfangswandbereich 17 des Mitnehmergehäuses 5 definiert ist, das abzudichtende Medium ansammelt und eine hydraulische dämpfende Wirkung auf die benachbarten Aufbauteile der Gleitringanordnung ausüben kann.

Der Basiskörper 19 des Dämpfungsringes 15 kann den Gleitring 2 nach Art einer Bandage umgreifen und dadurch zusätzlich zu seiner dämpfenden Wirkung den Gleitring 2 umfänglich verstärken. Der Gleitring 2 besteht vorzugsweise aus einem verschleissfesten keramischen Material. Es können jedoch auch Kohlenstoffmaterialien zum Einsatz kommen. In beiden Fällen wirkt die Bandage einer Sprödbruchneigung dieser Materialien entgegen.

Die Erfindung ist nicht auf die erwähnte Anzahl an verdickten Dämpfungsbereichen und Rastnasen des Dämpfungsringes beschränkt. Vielmehr kann die Anzahl bei Bedarf vergrössert werden. Auch können, wenn erwünscht, die Rastnasen bei gewissen Anwendungsfällen der Erfindung wegfallen und die Verbindung zwischen dem Gleitring und dem Mitnehmergehäuse alleine mittels der Dämpfungsbereiche bewirkt werden. Ferner kann der Basiskörper des Dämpfungsringes anstelle als Bandage auch in Gestalt von einfachen Stegen ausgebildet sein, die die Dämpfungsbereiche miteinander verbinden. Bei einer anderen Ausgestaltung der Erfindung kann die dämpfende Wirkung alleine durch den Basiskörper bewirkt werden, so dass die Dämpfungsbereiche entfallen können, indem der Dämpfungsring aus einem entsprechend gut dämpfenden Material gebildet ist oder eine Formgebung mit schwingungsdämpfender Wirkung hat.

Bei der vorbeschrieben Ausführungsform der Erfindung ist der rotierende Gleitring axial beweglich auf der Welle bzw. und dem röhrförmigen Bereich des Mitnehmergehäuses angeordnet und mit den Federn der Vorspanneinrichtung beaufschlagt. Dies hat den Vorteil, dass axiale hochfrequente Schwingungen durch das Feder-Massesytem Gleitring - Federn - Mitnehmergehäuse entkoppelt und dadurch deren schädliche Auswirkungen auf den Gleitring vermieden werden. Obschon diese Ausgestaltung der Gleitringanordnung demzufolge bevorzugt wird, liegt es im Rahmen der Erfindung, eine Anordnung vorzusehen, bei der nur der stationäre Gleitring mit einer Federvorspannkraft beaufschlagt ist.

## Patentansprüche

1. Gleitringanordnung einer Gleitringdichtung, mit einem zur gemeinsamen Drehung mit einem rotierenden Bauteil vorgesehenen Gleitring (2) und einem Mitnehmergehäuse (5) an dem der Gleitring in Drehkraft übertragender Beziehung gehalten ist, indem zur Halterung des Gleitringes (2) am Mitnehmergehäuse (5) ein den Gleitring aussenumfänglich umgreifendes ringförmiges Dämpfungselement (15) aus einem schwingungsdämpfenden Material zwischen einem äusseren Umfangsbereich des Gleitringes und einem benachbarten Umfangsbereich (17) des Mitnehmergehäuses (5) angeordnet ist und mit jedem dieser Teile in Drehkraft übertragender Beziehung steht, **dadurch gekennzeichnet, dass** das Dämpfungselement (15) einen ringförmigen, den Gleitring (2) mit einem radialen Spiel umgreifenden Basiskörper (19) mit daran ausgebildeten umfänglich beabstandeten Dämpfungsbereichen (18) mit vergrösserter Querschnittsabmessung aufweist, die in ausgerichteten Aussparungen (20,25) am Gleitring und Mitnehmergehäuse (5) aufgenommen sind.

2. Gleitringanordnung nach Anspruch 1, **dadurch gekennzeichnet, dass** die Dämpfungsbereiche (18) im Wesentliche rechteckförmige Verdickungen des Basiskörpers (19) sind.

3. Gleitringanordnung nach Anspruch 1 oder 2, **dadurch gekennzeichnet, dass** an Stellen, die gegenüber den Dämpfungsbereichen (18) umfänglich versetzt sind, Rastnasen (21) vorgesehen sind, die in dazu ausgerichtete Aussparungen (23,24) am Gleitring und Mitnehmergehäuse (5) mit Schnappsitz eingreifen.

4. Gleitringanordnung nach einem der vorhergehenden Ansprüche, **dadurch gekennzeichnet, dass** das ringförmige Dämpfungselement (15) ein Formteil aus einem Kunststoffmaterial ist.

5. Gleitringanordnung nach Anspruch 4, **dadurch gekennzeichnet, dass** das Kunststoffmaterial aus der Gruppe der Polyolefine, vorzugsweise Polyamid, mit einem Anteil von 5 bis 35 Vol %, vorzugsweise etwa 20 Vol %, Kohlenstoff besteht.

6. Gleitringanordnung nach einem der vorhergehenden Ansprüche, **dadurch gekennzeichnet, dass** das Mitnehmergehäuse (5) einen zentralen rohrförmigen Bereich (16) hat, durch den das rotierende Bauteil hindurchführbar ist.

7. Gleitringanordnung nach Anspruch 6, **dadurch gekennzeichnet, dass** der rohrförmige Bereich (16) eine innere Durchmesserabmessung hat, die grösser als die äussere Durchmesserabmessung des Gleitringes (2) ist.

8. Gleitringanordnung nach einem der vorhergehenden Ansprüche, **dadurch gekennzeichnet, dass** der Gleitring (2) axial beweglich angeordnet und eine zwischen dem Gleitring und dem Mitnehmergehäuse (5) abgestützte Federvorspanneinrichtung (10) zur Ausübung einer axialen Vorspannkraft auf den Gleitring (2) vorgesehen ist.

## Claims

1. Face seal assembly for an axial face seal comprising a seal ring (2) intended for rotation in common with a rotary component and a driver housing (5) on which the seal ring is mounted in torque transferring relationship therewith, wherein, for the purposes of mounting the seal ring (2) on the driver housing (5), a ring-shaped damping element (15) consisting of an anti-vibration material and peripherally encompassing the seal ring is arranged between an outer peripheral portion of the seal ring and a neighbouring peripheral portion (17) of the driver housing (5) and is in torque transferring relationship with each of these parts, **characterized in that** the damping element (15) comprises a ring-shaped base body (19) which encompasses the seal ring (2) with radial play and has peripherally spaced absorption portions (18) of greater cross-sectional dimension that are formed thereon and are seated in aligned recesses (20, 25) in the seal ring and the driver housing (5).

2. Face seal assembly according to Claim 1, **characterized in that** the absorption portions (18) are in the form of a substantially rectangular thickening of the base body (19).

3. Face seal assembly according to Claim 1 or 2, **characterized in that** latching noses (21) are provided at positions that are peripherally displaced with respect to the absorption portions (18), said latching noses engaging in snap-in manner in recesses (23, 24) in the face seal and the driver housing (5) that are aligned therewith.

4. Face seal assembly according to any of the preceding Claims, **characterized in that** the ring-shaped damping element (15) is a moulded part consisting of a synthetic material.

5. Face seal assembly according to Claim 4, **characterized in that** the synthetic material consists of a material from the group comprising polyolefins, preferably polyamide, having a carbon content of 5 to 35 Vol %, preferably about 20 Vol %.

6. Face seal assembly according to any of the preceding Claims, **characterized in that** the driver housing (5) has a central tubular portion (16) through which the rotary component is passable.

7. Face seal assembly according to Claim 6, **characterized in that** the tubular portion (16) has an inner diametrical dimension which is larger than the outer diametrical dimension of the seal ring (2).

8. Face seal assembly according to any of the preceding Claims, **characterized in that** the seal ring (2) is arranged such as to be axially moveable and **in that** there is provided a spring biasing device (10) for exerting an axial bias force on the seal ring (2) which is supported between the seal ring and the driver housing (5).

## Revendications

1. Ensemble à anneau glissant d'une garniture étanche à anneau glissant, avec un anneau glissant (2) prévu pour la rotation commune avec un composant rotatif et avec un boîtier d'entraînement (5), au niveau duquel l'anneau glissant est maintenu dans un rapport de transmission de force de rotation, un élément d'amortissement (15) annulaire entourant en périphérie extérieure l'anneau glissant en un matériau amortissant les vibrations étant disposé entre une zone périphérique extérieure de l'anneau glissant et une zone périphérique (17) contiguë du boîtier d'entraînement (5) et se trouvant avec chacune de ces pièces dans un rapport de transmission de force de rotation pour maintenir l'anneau glissant (2) sur le boîtier d'entraînement (5), **caractérisé en ce que** l'élément d'amortissement (15) présente un corps de base (19) annulaire, entourant l'anneau glissant (2) avec un jeu radial, doté de zones d'amortissement (18) espacées sur la périphérie, réalisées dessus avec une dimension en section agrandie, lesquelles sont reçues dans des évidements (20, 25) alignés sur l'anneau glissant et le boîtier d'entraînement (5).

2. Ensemble à anneau glissant selon la revendication 1, **caractérisé en ce que** les zones d'amortissement (18) sont des épaississements du corps de base (19) essentiellement rectangulaires.

3. Ensemble à anneau glissant selon la revendication 1 ou 2, **caractérisé en ce qu'**aux endroits qui sont décalés sur la périphérie par rapport aux zones d'amortissement (18) sont prévus des ergots d'enclenchement (21) qui s'engagent dans des évidements (23, 24) alignés à cet effet sur l'anneau glissant et le boîtier d'entraînement (5) présentant un logement à enclenchement.

4. Ensemble à anneau glissant selon l'une quelconque des revendications précédentes, **caractérisé en ce que** l'élément d'amortissement (15) annulaire est une pièce façonnée en un matériau synthétique.

5. Ensemble à anneau glissant selon la revendication 4, **caractérisé en ce que** le matériau synthétique du groupe des polyoléfines, de préférence le polyamide, se compose d'une part de 5 à 35 % en volume, de préférence environ de 20 % en volume de carbone.

6. Ensemble à anneau glissant selon l'une quelconque des revendications précédentes, **caractérisé en ce que** le boîtier d'entraînement (5) présente une zone (16) tubulaire centrale, au travers de laquelle le composant rotatif peut être inséré.

7. Ensemble à anneau glissant selon la revendication 6, **caractérisé en ce que** la zone tubulaire (16) présente une dimension de diamètre intérieure qui est supérieure à la dimension de diamètre extérieure de l'anneau glissant (2).

8. Ensemble à anneau glissant selon l'une quelconque des revendications précédentes, **caractérisé en ce que** l'anneau glissant (2) est disposé de manière mobile axialement et un dispositif de précontrainte de ressort (10) en appui entre l'anneau glissant et le boîtier d'entraînement (5) est prévu pour exercer une précontrainte axiale sur l'anneau glissant (2).
